# FASCICULE DE BREVET EUROPEEN

(11) **EP 2 720 935 B1**
(45) Date de publication et mention de la délivrance du brevet: **21.10.2015**
(21) Numéro de dépôt: 12731019.1
(22) Date de dépôt: 30.04.2012
(51) Int. Cl.: B62M 6/45, B62J 99/00

(54) **PROCEDE DE GESTION DE L'ENERGIE DANS UN VEHICULE A ASSISTANCE ELECTRIQUE**
LEISTUNGSSTEUERUNGSVERFAHREN FÜR EIN FAHRZEUG MIT ELEKTRISCHEM HILFSANTRIEB
POWER MANAGEMENT METHOD FOR AN ELECTRICALLY ASSISTED VEHICLE

(30) Priorité: 14.06.2011 FR 1155176
(43) Date de publication de la demande: 23.04.2014
(73) Titulaire: Commissariat à l'Énergie Atomique et aux Énergies Alternatives, 75015 Paris (FR); Decathlon, 59650 Villeneuve d'Ascq (FR)
(72) Inventeur: GROS, Jean-Philippe, F-38120 Le Fontanil Cornillon (FR); BARLA, Charlie, F-59800 Lille (FR); JOALLAND, Sylvain, F-34000 Montpellier (FR); JOBERT, Timothée, F-38000 Grenoble (FR); RICHE, Stéphanie, F-38000 Grenoble (FR)
(74) Mandataire: Thibon, Laurent
(86) Numéro de dépôt international: PCT/FR2012/050960
(87) Numéro de publication internationale: WO 2012/172228

(56) Documents cités:
- EP-A1- 1 295 785
- DE-A1- 19 600 243
- FR-A1- 2 938 233

## Description

### Domaine de l'invention

La présente invention concerne un procédé de gestion de l'énergie dans un véhicule à assistance électrique tel qu'un vélo à assistance électrique. L'homme de l'art saura adapter le procédé proposé à d'autres types de véhicules à assistance électrique, par exemple une trottinette à assistance électrique, un aviron à assistance électrique, etc. Plus généralement, dans la présente demande, on entend par véhicule à assistance électrique tout véhicule destiné à être mu par une force humaine, et muni d'une assistance électrique motorisée susceptible de compléter l'énergie humaine ou de la remplacer occasionnellement.

### Exposé de l'art antérieur

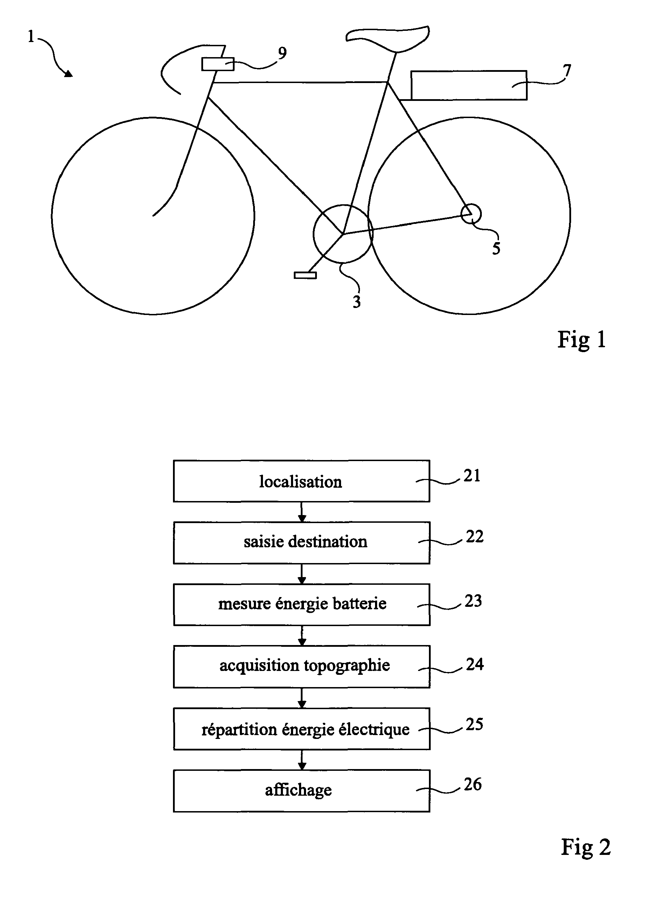

La figure 1 représente très schématiquement un vélo 1 à assistance électrique. Un tel vélo comprend un pédalier 3, relié au moyeu de la roue arrière par l'intermédiaire d'une chaîne et de roues crantées (non représentées). Le vélo 1 comprend en outre un moteur 5 d'assistance au pédalage, alimenté en électricité par une batterie 7. Le moteur 5 est disposé pour, lorsqu'il fonctionne, entraîner en rotation le moyeu arrière de façon à soulager l'effort du cycliste. Des alternatives existent dans lesquelles le moteur d'assistance peut être disposé pour entraîner le pédalier, le moyeu avant, ou la roue elle-même, par exemple par l'intermédiaire d'un galet de friction. Dans l'exemple représenté, la batterie 7 est située au niveau du porte-bagages arrière du vélo.

Le vélo 1 comprend un boîtier de contrôle 9 permettant à l'utilisateur de commander la mise en route du moteur 5. Le boîtier 9 permet par exemple de choisir parmi plusieurs niveaux d'assistance (faible, moyen, fort, etc.).

Le boîtier de contrôle 9 comprend également un indicateur de l'état de charge de la batterie. Il peut s'agir d'un écran affichant directement la quantité totale d'énergie électrique disponible dans la batterie, sous la forme d'une valeur numérique (par exemple en ampèreheures), ou sous la forme d'une représentation graphique. L'écran peut également afficher en temps réel la puissance électrique consommée par le moteur (par exemple en watts), et diverses informations telles que la vitesse, le nombre de kilomètres parcourus, etc.

Dans certains systèmes, le boîtier 9 affiche une estimation du nombre de kilomètres que l'utilisateur peut encore parcourir avant que la batterie n'atteigne un niveau de décharge critique. Il s'agit toutefois d'une estimation grossière, calculée, pour un niveau d'assistance donné, en tenant compte uniquement de l'état de charge de la batterie.

Les documents EP1295785 et DE19600243 décrivent des exemples de systèmes de gestion de l'énergie dans des véhicules à assistance électrique, en accord avec le préambule de la revendication 7.

Un inconvénient des systèmes de contrôle actuels réside dans le fait qu'ils ne permettent pas de fournir une indication précise de l'autonomie du vélo.

Un autre inconvénient des systèmes de contrôle actuels est qu'ils ne permettent pas à l'utilisateur de gérer intelligemment l'utilisation de l'assistance électrique au cours d'un itinéraire.

### Résumé

Un objet d'un mode de réalisation de la présente invention est de prévoir un procédé de gestion de l'énergie dans un véhicule à assistance électrique tel qu'un vélo électrique, palliant au moins en partie certains des inconvénients des solutions actuelles.

Un objet d'un mode de réalisation de la présente invention est de prévoir un procédé de gestion de l'énergie permettant de déterminer l'autonomie du véhicule avec plus de précision que les solutions actuelles.

Un objet d'un mode de réalisation de la présente invention est de prévoir un procédé de gestion de l'énergie permettant à l'utilisateur de choisir facilement un itinéraire en fonction de la quantité d'énergie électrique disponible dans la batterie.

Un objet d'un mode de réalisation de la présente invention est de prévoir un procédé de gestion de l'énergie permettant à l'utilisateur de mieux répartir son effort au cours d'un itinéraire, en tenant compte de la quantité d'énergie électrique disponible dans la batterie.

Ainsi, un mode de réalisation de la présente invention prévoit un procédé de gestion de l'énergie dans un véhicule à assistance électrique, ce procédé étant mis en oeuvre par un ordinateur de bord équipant le véhicule, comprenant les étapes suivantes : a) diviser en trajets élémentaires un itinéraire entre un point de départ et un point d'arrivée ; b) pour chaque trajet élémentaire, déterminer, en tenant compte de données topographiques préenregistrées, la quantité d'énergie totale nécessaire pour parcourir le trajet, affecter une quantité d'énergie électrique au trajet, et en déduire la quantité d'énergie humaine nécessaire pour parcourir le trajet.

Selon un mode de réalisation de la présente invention, à chaque trajet élémentaire, à l'étape b), est affectée une quantité d'énergie électrique choisie pour que la quantité totale d'énergie électrique disponible dans une batterie du véhicule reste supérieure à un seuil entre le point de départ et le point d'arrivée.

Selon un mode de réalisation de la présente invention, le procédé de gestion de l'énergie comprend en outre l'asservissement d'un moteur électrique d'assistance du véhicule pour commander automatiquement, pour chaque trajet élémentaire, le niveau d'assistance en fonction de ladite quantité d'énergie électrique affectée à l'étape b).

Selon un mode de réalisation de la présente invention, le procédé de gestion de l'énergie comprend une étape de mesure de la puissance moyenne développée par l'utilisateur.

Selon un mode de réalisation de la présente invention, le procédé de gestion de l'énergie comprend une étape de géolocalisation du véhicule.

Selon un mode de réalisation de la présente invention, le procédé de gestion de l'énergie comprend une étape de mesure de la quantité totale d'énergie disponible dans une batterie du véhicule.

Un autre mode de réalisation de la présente invention prévoit un système de gestion d'énergie dans un cycle à assistance électrique, comprenant un ordinateur de bord adapté à : diviser en trajets élémentaires un itinéraire entre un point de départ et un point d'arrivée ; pour chaque trajet élémentaire, déterminer, en tenant compte de données topographiques préenregistrées, la quantité d'énergie totale nécessaire pour parcourir le trajet, affecter une quantité d'énergie électrique au trajet, et en déduire la quantité d'énergie humaine nécessaire pour parcourir le trajet.

### Brève description des dessins

Ces objets, caractéristiques et avantages, ainsi que d'autres seront exposés en détail dans la description suivante de modes de réalisation particuliers faite à titre non limitatif en relation avec les figures jointes parmi lesquelles :
la figure 1, précédemment décrite, représente de façon schématique un exemple de vélo à assistance électrique ;
la figure 2 est un organigramme représentant des étapes d'un mode de réalisation d'un procédé de gestion de l'énergie dans un vélo à assistance électrique, permettant de gérer l'utilisation de l'assistance au cours d'un itinéraire ;
la figure 3 illustre un exemple d'affichage de données déterminées par le procédé décrit en relation avec la figure 2 ;
la figure 4 est un organigramme représentant des étapes d'un mode de réalisation d'un procédé de gestion de l'énergie dans un vélo à assistance électrique, permettant à l'utilisateur de choisir un itinéraire en fonction de la quantité d'énergie électrique disponible dans la batterie ; et
la figure 5 illustre un exemple d'affichage de données déterminées par le procédé décrit en relation avec la figure 4 ; et
la figure 6 est un schéma bloc représentant sous forme simplifiée un mode de réalisation d'un système de gestion de l'énergie dans un vélo à assistance électrique.

### Description détaillée

Pour aider l'utilisateur à gérer l'utilisation de l'énergie électrique dans un véhicule à assistance électrique tel qu'un vélo à assistance électrique, on propose ici un procédé comprenant une étape de détermination de la quantité totale d'énergie nécessaire pour parcourir un trajet. Connaissant la quantité totale d'énergie nécessaire pour parcourir le trajet, on affecte une quantité d'énergie électrique au trajet et on en déduit l'effort, c'est-à-dire la quantité d'énergie humaine, que doit fournir l'utilisateur pour parcourir le trajet. Dans une variante de réalisation du procédé proposé, on affecte une quantité d'énergie électrique au trajet, et, connaissant la puissance moyenne fournie par l'utilisateur, on en déduit si le véhicule pourra ou non parcourir la totalité du trajet.

La figure 2 est un organigramme représentant des étapes d'un mode de réalisation d'un procédé de gestion de l'énergie dans un vélo à assistance électrique. Dans cet exemple, le procédé est mis en oeuvre au moins partiellement par un système de gestion tel qu'un ordinateur de bord ou un système équivalent comprenant au moins une unité de calcul. L'ordinateur de bord est associé à un système de navigation et peut accéder à des données cartographiques. Le système de navigation est de préférence associé à des moyens de géo-localisation, par exemple un GPS (de l'anglais "Global Positioning System"). Le système de navigation peut en outre accéder des données topographiques préenregistrées, par exemple à une base de données topographiques, de sorte que, pour un itinéraire donné, l'ordinateur de bord peut déterminer à l'avance le profil topographique de l'itinéraire.

Lors d'une étape 21 ("localisation"), le point de départ d'un itinéraire à parcourir est déterminé. Le point de départ peut correspondre à la position courante du vélo, déterminée automatiquement par les moyens de géo-localisation. Dans une variante de réalisation, l'utilisateur peut saisir lui-même les coordonnées du point de départ de l'itinéraire.

Lors d'une étape 22 ("saisie destination"), l'utilisateur saisit les coordonnées d'une destination, ou point d'arrivée de l'itinéraire à parcourir.

Lors d'une étape 23 ("mesure énergie batterie"), le système de gestion mesure la quantité d'énergie électrique disponible dans la batterie, par exemple au moyen d'une jauge reliée à la batterie d'une part et à l'ordinateur de bord d'autre part.

Lors d'une étape 24 ("acquisition topographie"), le système acquiert les données topographiques correspondant à l'itinéraire déterminé aux étapes 21 et 22, et en déduit le profil topographique de l'itinéraire, c'est-à-dire l'élévation en fonction de la distance. Des cartes topographiques peuvent être préenregistrées dans l'ordinateur de bord. Dans un autre mode de réalisation, l'ordinateur de bord peut accéder à un serveur distant contenant des données cartographiques et/ou topographiques à l'aide de moyens de communication sans fil, par exemple de type GSM.

Lors d'une étape 25 ("répartition énergie électrique"), la quantité d'énergie totale (électrique + humaine) nécessaire pour parcourir l'itinéraire est déterminée, et la quantité d'énergie électrique disponible est répartie et affectée à différentes parties de l'itinéraire.

Dans un mode de réalisation préféré, l'itinéraire est divisé en tronçons, ou trajets élémentaires. Pour chaque tronçon, l'énergie totale nécessaire pour parcourir le tronçon est déterminée, en tenant compte du profil topographique du tronçon. D'autres paramètres peuvent être pris en compte tels que la vitesse moyenne de déplacement souhaitée sur le tronçon et la masse du vélo, cycliste compris, ou encore la vitesse du vent et la pression des pneus, à l'aide de capteurs adéquats permettant notamment d'évaluer les différentes composantes s'exerçant à l'encontre du déplacement du vélo.

La quantité d'énergie électrique disponible dans la batterie est alors répartie entre les différents tronçons. A chaque tronçon, est affectée une certaine quantité d'énergie électrique choisie de façon que l'utilisateur puisse parcourir la totalité de l'itinéraire sans que la batterie n'atteigne un niveau ou seuil de décharge critique. A titre d'exemple, si le véhicule est équipé d'un système de recharge de la batterie dans les descentes, le procédé de répartition de l'énergie électrique en tient compte. Ainsi, si l'itinéraire comprend des tronçons de descente, une partie plus importante de l'énergie électrique disponible est affectée aux tronçons précédant les tronçons en descente, car on sait que la batterie se rechargera au moins partiellement pendant les descentes. Plus généralement, on propose de répartir l'énergie électrique disponible de façon à minimiser et à mieux répartir l'effort de l'utilisateur tout en s'assurant qu'il parvienne à destination en conservant un niveau de charge minimal de la batterie. Bien entendu, en fonction de l'itinéraire, et éventuellement d'un mode d'utilisation sélectionné par l'utilisateur (urbain, loisir, sportif, etc.), on pourra prévoir de ne pas consommer la totalité de l'énergie électrique disponible et donc d'ajuster le niveau d'assistance électrique. Alternativement, si l'on s'aperçoit que la batterie ne contient pas assez d'énergie pour parcourir la totalité de l'itinéraire, on peut prévoir de réduire le niveau d'assistance sur certains tronçons moins exigeants, et de demander une contribution en puissance humaine supplémentaire à l'utilisateur. Dans un exemple de réalisation, l'utilisateur peut sélectionner une vitesse moyenne souhaitée sur l'itinéraire. L'énergie électrique pourra alors être répartie de façon à respecter au mieux la vitesse souhaitée tout au long de l'itinéraire.

Connaissant la quantité totale d'énergie nécessaire pour parcourir chaque tronçon, et ayant affecté à chaque tronçon une certaine quantité d'énergie électrique, le système en déduit la quantité d'énergie humaine que devra fournir l'utilisateur pour parcourir chaque tronçon.

On notera qu'un des critères de répartition de l'énergie électrique à l'étape 25 peut justement être de rendre l'effort à fournir par l'utilisateur le plus uniforme possible tout au long de l'itinéraire. Tout autre critère de répartition de l'énergie électrique pourra être choisi.

Lors d'une étape 26 ("affichage"), l'ordinateur de bord indique à l'utilisateur, pour chaque tronçon de l'itinéraire, la quantité d'énergie ou la puissance moyenne qu'il devra fournir pour parcourir le tronçon. Optionnellement, on peut prévoir un asservissement du moteur d'assistance électrique pour commander automatiquement le niveau d'assistance en fonction de la quantité d'énergie électrique affectée à chaque tronçon à l'étape 25. Ceci permet que l'utilisateur n'ait pas d'autre manipulation à prévoir que celle de saisir les coordonnées de sa destination.

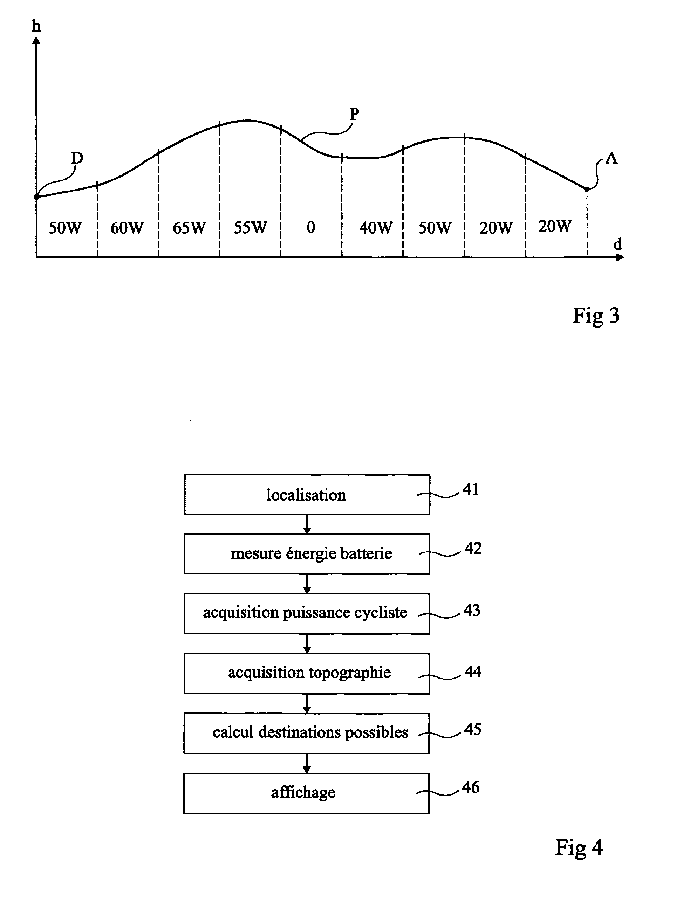

La figure 3 illustre, à titre d'exemple, un mode d'affichage, à l'attention de l'utilisateur, de données déterminées par le procédé décrit en relation avec la figure 2. Un écran de l'ordinateur de bord affiche le profil topographie P de l'itinéraire, c'est-à-dire l'élévation h en fonction de la distance d, entre le point de départ D et le point d'arrivée A de l'itinéraire. Le profil P est divisé en tronçons, et pour chaque tronçon est indiquée la puissance humaine moyenne que devra fournir le cycliste pour parcourir le tronçon. Dans cet exemple, la puissance moyenne est indiquée en watts. L'invention ne se restreint bien entendu pas à ce mode d'affichage particulier. Toute autre forme d'affichage peut être prévue.

Par ailleurs, on peut prévoir de recalculer la répartition de l'énergie électrique en un ou plusieurs points intermédiaires de l'itinéraire. Ceci permet de réajuster le calcul dans le cas où, sur les tronçons déjà parcourus, le cycliste aurait fourni plus ou moins que l'effort moyen préconisé, déterminé initialement.

Un avantage du procédé proposé est qu'il permet de gérer l'utilisation de l'assistance électrique au cours d'un itinéraire choisi par l'utilisateur.

On notera en particulier que l'utilisation de données topographiques préenregistrées permet d'anticiper les données d'élévation sur le parcours complet, et donc d'anticiper la consommation future sur le parcours.

La figure 4 est un organigramme représentant des étapes d'un autre mode de réalisation d'un procédé de gestion de l'énergie dans un vélo à assistance électrique.

Lors d'une étape 41 ("localisation"), le point de départ du cycliste est déterminé. Le point de départ correspond par exemple à la position courante du véhicule, et peut être déterminée automatiquement par des moyens de géo-localisation. A titre alternatif, l'utilisateur peut saisir lui-même les coordonnées du point de départ.

Lors d'une étape 42 ("mesure énergie batterie"), le système de gestion mesure la quantité d'énergie électrique disponible dans la batterie, par exemple au moyen d'une jauge reliée à l'ordinateur de bord.

Lors d'une étape 43 ("acquisition puissance cycliste"), la puissance moyenne fournie par le cycliste (puissance humaine) est déterminée. Dans un mode de réalisation simplifié, il peut s'agir d'une valeur préenregistrée dans l'ordinateur de bord. On peut par exemple prévoir un système comprenant plusieurs mode d'utilisation (urbain, loisir, sportif, etc.), chaque mode d'utilisation correspondant à une valeur de la puissance moyenne développée par le cycliste. Dans un mode de réalisation préféré, la puissance moyenne développée est mesurée in-situ, à l'aide de capteurs adaptés équipant le vélo.

Lors d'une étape 44 ("acquisition topographie"), le système acquière les données cartographiques et topographiques d'une zone géographique ayant pour centre le point de départ déterminé à l'étape 41.

Lors d'une étape 45 ("calcul destinations possibles"), l'ordinateur de bord calcule, en tenant compte de la puissance moyenne fournie par le cycliste, de l'énergie électrique disponible, et de la topographie, la distance maximale que peut parcourir le vélo (ou autonomie du vélo), dans une ou plusieurs directions à partir du point de départ déterminé à l'étape 41. Dans un exemple de réalisation, un balayage angulaire de la carte est effectué, ayant pour centre le point de départ déterminé à l'étape 41. L'autonomie du véhicule est calculée pour toutes les directions successives du balayage. A titre d'exemple, une résolution angulaire comprise entre 1 et 10 degrés peut être choisie. Ceci permet d'indiquer précisément à l'utilisateur son rayon d'action, c'est-à-dire l'ensemble des points qu'il peut atteindre sans que la batterie n'atteigne un niveau de décharge critique.

Dans un exemple de réalisation, pour chaque direction du balayage angulaire, le point déterminé à l'étape 41 est choisi comme point de départ d'un itinéraire. Un point suffisamment éloigné du point de départ et appartenant à la direction angulaire considérée, est choisi comme point d'arrivée de l'itinéraire. Par suffisamment éloigné on entend que la distance entre le point de départ et le point d'arrivée est supérieure à l'autonomie maximale du vélo dans des conditions favorables. Par exemple, on peut choisir le point d'arrivée à une distance du point de départ 1,5 fois supérieure à l'autonomie théorique du vélo sur un terrain plat, batterie chargée.

L'itinéraire ainsi déterminé est divisé en tronçons, ou trajets élémentaires. Pour chaque tronçon, l'énergie totale nécessaire pour parcourir le tronçon est déterminée, en tenant compte des données topographiques préenregistrées. D'autres paramètres peuvent être pris en compte tels que la vitesse moyenne de déplacement sur le tronçon et la masse du vélo, ou encore la résistance de l'air (par exemple estimée en mesurant la vitesse du vent) ou la résistance au roulement (par exemple estimée en mesurant la pression des pneus). La quantité d'énergie humaine fournie par le cycliste sur chaque tronçon est calculée, en tenant compte de la puissance moyenne du cycliste déterminée à l'étape 43. Ainsi, à chaque tronçon est affectée une certaine quantité d'énergie humaine. Connaissant la quantité d'énergie totale nécessaire pour parcourir chaque tronçon, et la quantité d'énergie humaine affectée à chaque tronçon, le système détermine la quantité d'énergie électrique nécessaire pour parcourir chaque tronçon. On détermine alors quel est, en partant du point de départ, le dernier tronçon de l'itinéraire qui pourra être parcouru avant que la batterie n'atteigne un niveau de décharge critique.

Tout autre procédé adapté pourra être utilisé pour déterminer le point le plus éloigné que peut atteindre le cycliste dans une direction donnée.

Dans une variante de réalisation, pour déterminer les destinations possibles, on utilise les données cartographiques de façon à ne considérer que des destinations et des itinéraires situés sur des routes ou chemins praticables à vélo.

Lors d'une étape 46 ("affichage"), l'ordinateur de bord indique à l'utilisateur, pour chaque direction du balayage angulaire réalisé à l'étape 45, l'autonomie du véhicule. Cette information est par exemple affichée sur une carte géographique, sous la forme d'une courbe représentant l'ensemble des destinations accessibles à partir du point de départ déterminé à l'étape 41.

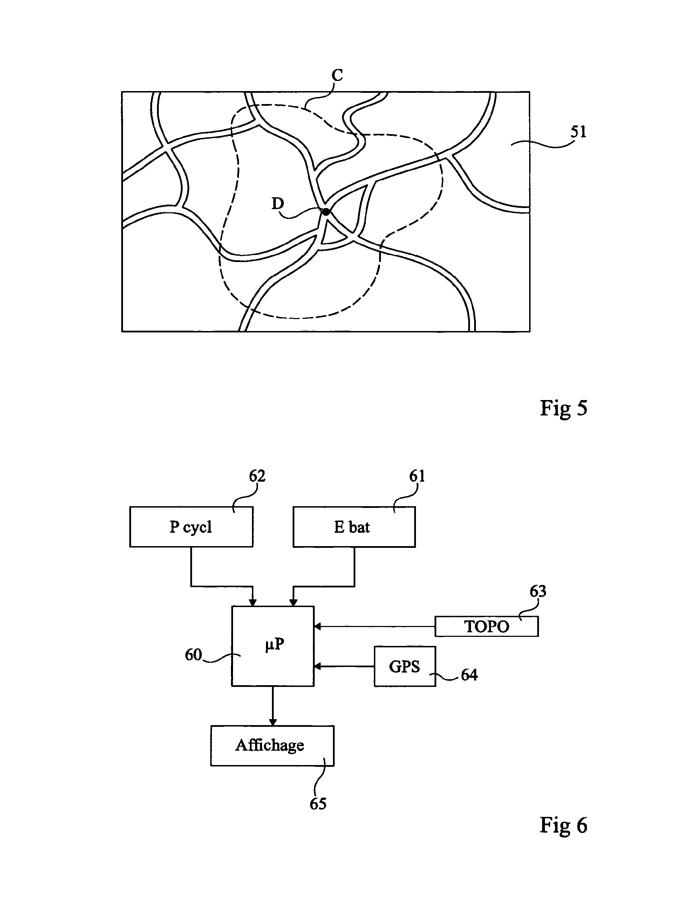

La figure 5 illustre, à titre d'exemple, un mode d'affichage, à l'attention de l'utilisateur, de données déterminées par le procédé décrit en relation avec la figure 4. Un écran de l'ordinateur de bord affiche la carte 51 d'une zone géographique ayant pour centre le point de départ D déterminé à l'étape 41. Une courbe C représentant l'ensemble des destinations accessibles à partir du point de départ D est affichée en superposition de la carte 51. Toute autre forme d'affichage peut bien entendu être prévue. On peut notamment prévoir d'afficher plusieurs courbes, correspondant à plusieurs niveaux d'assistance (sportif, urbain, loisir, etc.) et/ou de puissance moyenne fournie par le cycliste. Par ailleurs, on peut prévoir de recalculer les destinations possibles en cours de route, pour réajuster la courbe C dans le cas où le cycliste aurait fourni plus ou moins que l'effort correspondant à la puissance moyenne déterminée à l'étape 43.

Un avantage de ce mode de réalisation est qu'il permet de déterminer l'autonomie du véhicule de façon plus précise et plus réaliste que les solutions actuelles. En outre, le procédé de gestion d'énergie proposé permet à l'utilisateur de choisir facilement un itinéraire en tenant compte de l'autonomie réelle du véhicule sur cet itinéraire.

La figure 6 est un schéma bloc représentant sous forme simplifiée un mode de réalisation d'un système de gestion de l'énergie dans un vélo à assistance électrique.

Le système de gestion comprend une unité de calcul 60 (µP), correspondant par exemple à un microprocesseur d'un ordinateur de bord. Un capteur 62 (P_{cycl}) adapté à mesurer la puissance développée par le cycliste est relié à l'unité de calcul 60. Un capteur 61 (Ebat) adapté à déterminer la quantité d'énergie électrique disponible dans la batterie est relié à l'unité de calcul 60. L'unité de calcul 60 est en outre reliée à une base 63 (Topo) de données topographiques et/ou cartographiques. La base de données 63 peut être locale, c'est-à-dire enregistrée dans une mémoire de l'ordinateur de bord. Alternativement, la base de données 63 peut être enregistrée sur un serveur distant auquel l'ordinateur de bord peut accéder par des moyens de communication sans fil, par exemple par l'intermédiaire d'un réseau de type GSM. Dans cet exemple, un module de géo-localisation 64 (GPS) est relié à l'unité de calcul 60. De plus, un écran 65 (Affichage) est prévu, pour afficher des informations à l'attention de l'utilisateur.

Des modes de réalisation particuliers de la présente invention ont été décrits. Diverses variantes et modifications apparaîtront à l'homme de l'art.

En particulier, l'invention ne se restreint pas aux exemples décrits ci-dessus dans lesquels l'énergie totale nécessaire pour parcourir un trajet est déterminée en tenant compte de la topographie réelle du trajet. On pourra prévoir des modes de réalisation plus simples dans lesquels l'énergie totale nécessaire pour parcourir un trajet est déterminée en tenant compte de la longueur du trajet, et éventuellement d'une élévation moyenne standard (préenregistrée) correspondant à un mode d'utilisation sélectionné par l'utilisateur (plat, collines, montagne, etc.).

Par ailleurs, le procédé de gestion d'énergie proposé a été décrit plus particulièrement en relation avec un exemple d'utilisation dans un vélo à assistance électrique. L'invention ne se restreint pas à cet exemple particulier.

## Revendications

1. Procédé de gestion de l'énergie dans un véhicule (1) mu par une force humaine et muni d'une assistance électrique, ce procédé étant mis en oeuvre par un ordinateur de bord équipant le véhicule, comprenant les étapes suivantes :
a) diviser en trajets élémentaires un itinéraire entre un point de départ (D) et un point d'arrivée (A) ; et
b) pour chaque trajet élémentaire, déterminer en tenant compte de données topographiques préenregistrées la quantité d'énergie totale nécessaire pour parcourir le trajet, affecter une quantité d'énergie électrique au trajet, et en déduire la quantité d'énergie humaine nécessaire pour parcourir le trajet.

2. Procédé selon la revendication 1, dans lequel à chaque trajet élémentaire, à l'étape b) est affectée une quantité d'énergie électrique choisie pour que la quantité totale d'énergie électrique disponible dans une batterie du véhicule reste supérieure à un seuil entre le point de départ (D) et le point d'arrivée (A).

3. Procédé selon la revendication 1 ou 2, comprenant en outre l'asservissement d'un moteur électrique (5) d'assistance du véhicule pour commander automatiquement, pour chaque trajet élémentaire, le niveau d'assistance en fonction de ladite quantité d'énergie électrique affectée à l'étape b).

4. Procédé selon l'une quelconque des revendications 1 à 3, comprenant une étape de mesure de la puissance moyenne développée par l'utilisateur.

5. Procédé selon l'une quelconque des revendications 1 à 4, comprenant une étape de géolocalisation du véhicule.

6. Procédé selon l'une quelconque des revendications 1 à 5, comprenant une étape de mesure de la quantité totale d'énergie disponible dans une batterie du véhicule.

7. Système de gestion d'énergie dans un cycle à assistance électrique, comprenant un ordinateur de bord charactérisé par le fait qu'il est adapté à :
diviser en trajets élémentaires un itinéraire entre un point de départ (D) et un point d'arrivée (A) ;
pour chaque trajet élémentaire, déterminer en tenant compte de données topographiques préenregistrées la quantité d'énergie totale nécessaire pour parcourir le trajet, affecter une quantité d'énergie électrique au trajet, et en déduire la quantité d'énergie humaine nécessaire pour parcourir le trajet.

## Patentansprüche

1. Ein Verfahren zum Leistungsmanagement in einem Fahrzeug 1, welches durch menschliche Kraft angetrieben wird und mit einer elektrischen Unterstützung versehen ist, wobei das Verfahren durch einen an Bord angeordneten Computer eingerichtet wird, der in dem Fahrzeug vorgesehen ist, wobei das Verfahren folgende Schritte aufweist:
a) Aufteilen eines Weges zwischen einem Startpunkt (D) und einem Ankunftspunkt (A) in Elementarabschnitte; und
b) Bestimmen der Gesamtmenge an notwendiger Leistung für jeden Elementarabschnitt, um diesen Abschnitt zu fahren, wobei voraufgezeichnete topographische Daten berücksichtigt werden; Zuordnen einer Menge an elektrischer Leistung für den Abschnitt und Ableiten der menschlichen Leistung davon, die zum Befahren des Abschnittes notwendig ist.

2. Verfahren nach Anspruch 1, wobei im Schritt b) jedem Elementarabschnitt eine Menge an elektrischer Leistung zugeordnet wird, die so ausgewählt ist, dass die Gesamtmenge an elektrischer Leistung, die in einer Batterie des Fahrzeugs verfügbar ist, zwischen dem Startpunkt (D) und dem Ankunftspunkt (A) größer als eine Schwelle bleibt.

3. Verfahren nach Anspruch 1 oder 2, die weiter eine Rückkoppelungssteuerung eines elektrischen Leistungsunterstützungsmotors (5) des Fahrzeugs aufweist, um für jeden Elementarabschnitt das Unterstützungsniveau gemäß der im Schritt b) zugeordneten elektrischen Leistung automatisch zu steuern.

4. Verfahren nach einem der Ansprüche 1 bis 3, welches einen Schritt aufweist, die durchschnittliche Leistung zu messen, die vom Anwender geliefert wird.

5. Verfahren nach einem der Ansprüche 1 bis 4, welches den Schritt aufweist, eine geographische Lage des Fahrzeugs zu bestimmen.

6. Verfahren nach einem der Ansprüche 1 bis 5, welches einen Schritt aufweist, die Gesamtmenge an Leistung zu messen, die in einer Batterie des Fahrzeugs verfügbar ist.

7. Leistungsmanagementsystem in einem elektrisch unterstütztem Fahrrad, welches einen an Bord angeordneten Computer aufweist, **dadurch gekennzeichnet, dass** es konfiguriert ist, um
einen Weg zwischen einem Startpunkt (D) und einem Ankunftspunkt (A) in Elementarabschnitte aufzuteilen;
für jeden Elementarabschnitt unter Berücksichtigung von zuvor aufgezeichneten topographischen Daten, die Gesamtmenge an Leistung zu bestimmen, die notwendig ist, um den Abschnitt zu fahren, dem Abschnitt eine Menge an elektrischer Leistung zuzuordnen und davon die Menge an menschlicher Leistung abzuleiten, die notwendig ist, um den Abschnitt zu fahren.

## Claims

1. A method of power management in a vehicle (1) driven by a human force and provided with an electrical assistance, this method being implemented by an on-board computer provided in the vehicle, comprising the steps of:
a) dividing into elementary sections an itinerary between a starting point (D) and an arrival point (A); and
b) for each elementary section, determining, taking into account prerecorded topographic data, the total amount of power necessary to travel the section, assigning an amount of electric power to the section, and deducing therefrom the amount of human power necessary to travel the section.

2. The method of claim 1, wherein each elementary section, at step b), is assigned an amount of electric power selected so that the total amount of electric power available in a battery of the vehicle remains greater than a threshold between the starting point (D) and the arrival point (A).

3. The method of claim 1 or 2, further comprising the feedback control of an electric power-assist motor (5) of the vehicle to automatically control, for each elementary section, the assistance level according to said amount of electric power assigned at step b).

4. The method of any of claims 1 to 3, comprising a step of measuring the average power delivered by the user.

5. The method of any of claims 1 to 4, comprising a step of geolocation of the vehicle.

6. The method of any of claims 1 to 5, comprising a step of measuring the total amount of power available in a battery of the vehicle.

7. A power management system in an electrically-assisted cycle, comprising an on-board computer **characterized in that** it is configured for:
dividing into elementary sections an itinerary between a starting point (D) and an arrival point (A);
for each elementary section, determining, taking into account prerecorded topographic data, the total amount of power necessary to travel the section, assigning an amount of electric power to the section, and deducing therefrom the amount of human power necessary to travel the section.
